# EUROPÄISCHE PATENTSCHRIFT

(11) **EP 2 990 279 B1**
(45) Veröffentlichungstag und Bekanntmachung des Hinweises auf die Patenterteilung: **26.02.2020**
(21) Anmeldenummer: 15182166.7
(22) Anmeldetag: 24.08.2015
(51) Int. Cl.: B60T 13/68, B60T 17/08

(54) **VENTILANORDNUNG FÜR EINE FEDERSPEICHERBREMSE**
VALVE ASSEMBLY FOR A SPRING-LOADED BRAKE
SYSTEMES DE VANNES POUR UN FREIN D'ACCUMULATEUR A RESSORT

(30) Priorität: 26.08.2014 DE 102014216930
(43) Veröffentlichungstag der Anmeldung: 02.03.2016
(73) Patentinhaber: Jungheinrich Aktiengesellschaft, 22047 Hamburg (DE)
(72) Erfinder: Rauch, Martin, 85406 Zolling (DE); Zeidler, Christoph, 84032 Landshut (DE)
(74) Vertreter: Tiesmeyer, Johannes

(56) Entgegenhaltungen:
- WO-A1-2007/006709
- US-A- 3 410 610
- US-A- 3 908 520

## Beschreibung

Die vorliegende Erfindung betrifft eine Ventilanordnung für eine hydraulisch oder pneumatisch lösbare Federspeicherbremse.

Derartige Federspeicherbremsen werden in der Praxis häufig als Parkbremsen für Fahrzeuge eingesetzt. Sie sind mechanisch in eine Bremsstellung vorgespannt und können im Normalbetrieb durch Anlegen eines Hydraulik- oder Pneumatik-Drucks gelöst werden, der von einer Normalbetrieb-Druckquelle erzeugt wird, etwa in Gestalt einer von einem Motor des Fahrzeugs angetriebenen Pumpe.

Ein bekanntes Problem bei solchen Federspeicherbremsen besteht darin, dass bei Ausfall der Normalbetrieb-Druckquelle die Federspeicherbremse in ihrer Bremsstellung verbleibt, was Probleme bereiten kann, etwa wenn ein Fahrzeug mit einer derartigen Federspeicherbremse abgeschleppt werden soll.

Um ein solches Fahrzeug auch bei Ausfall der Normalbetrieb-Druckquelle abschleppen zu können, etwa bei Ausfall des Verbrennungsmotors oder elektrischen Fehlern, muss eine alternative Einrichtung vorhanden sein, um die Federspeicherbremse zu lösen.

Aus der Praxis ist es bekannt, zu diesem Zweck die Federspeicherbremse über eine Ventilanordnung mit handbetätigten Ventilen wie Absperr schrauben oder Umschalthähnen an eine Notlöse-Druckquelle zu koppeln und gleichzeitig von der Normalbetrieb-Druckquelle zu entkoppeln.

Dann wird die Bremse beispielsweise durch manuellen Druckaufbau in der Notlöse-Druckquelle gelöst, und nach erfolgtem Druckaufbau wird der Druck über ein Rückschlagventil in der entsprechenden Bremskammer eingesperrt.

Ein Nachteil der vorstehend beschriebenen, bekannten Ventilanordnung besteht darin, dass sie nach Reparatur und Wiederinbetriebnahme des Fahrzeugs manuell zurückgesetzt werden muss, um die Federspeicherbremse von der Notlöse-Druckquelle zu entkoppeln und wieder mit der Normalbetrieb-Druckquelle zu koppeln, also die Notlösefunktion zu deaktivieren. Wird dies aus Unachtsamkeit unterlassen, bleibt die Federspeicherbremse dauerhaft gelöst. Zudem ist die Aktivierung und Deaktivierung der Notlösefunktion verhältnismäßig aufwändig.

Die WO 2007/006709 A zeigt eine Ventilanordnung gemäß dem Oberbegriff des Anspruch 1.

Daher besteht die Aufgabe der vorliegenden Erfindung darin, die bekannte Ventilanordnung so weiterzuentwickeln, dass eine Deaktivierung der Notlösefunktion nicht vergessen werden kann.

Dazu ist erfindungsgemäß eine Ventilanordnung für eine Federspeicherbremse vorgesehen, die umfasst: einen ersten Eingangsanschluss zum Anschließen an eine Normalbetrieb-Druckquelle zur maschinellen Erzeugung von Druck, einen zweiten Eingangsanschluss zum Anschließen an eine Notlöse-Druckquelle zur vorzugsweise manuellen Erzeugung von Druck und einen ersten Ausgangsanschluss zum Anschließen an eine Federspeicher-Druckkammer in einem Federspeicher-Zylinder der Federspeicherbremse.

Die Ventilanordnung ist verstellbar zwischen einer Normalstellung, in welcher der erste Eingangsanschluss mit dem ersten Ausgangsanschluss verbunden ist, und einer Notlösestellung, in welcher der erste Eingangsanschluss von dem ersten Ausgangsanschluss abgesperrt ist und der zweite Eingangsanschluss unter Zwischenanordnung eines Rückschlagventils mit dem ersten Ausgangsanschluss verbunden ist.

Weiterhin umfasst die Ventilanordnung ein Betätigungselement, um die Ventilanordnung von der Normalstellung in die Notlösestellung zu verstellen, sowie ein Rastmittel, welches dazu ausgebildet ist, die Ventilanordnung in der Notlösestellung überwindbar zu verrasten.

Erfindungsgemäß ist vorgesehen, dass die Ventilanordnung weiter einen Steueranschluss umfasst, der dazu ausgebildet ist, bei hinreichender Druck - beaufschlagung eine Verstellung der Ventilanordnung von der Not lösestellung in die Normalstellung unter Überwindung der Verrastung zu bewir - ken, sowie eine Steuerleitung umfasst, die den zweiten Eingangsanschluss mit dem Steueranschluss verbindet.

Wie nachfolgend noch genauer erläutert wird, kann so gewährleistet werden, dass eine Deaktivierung der Notlösefunktion, also eine Rückstellung der Ventilanordnung von der Notlösestellung in die Normalstellung nicht vergessen werden kann.

Wenn in der vorliegenden Anmeldung davon die Rede ist, dass ein Element an ein anderes angeschlossen oder mit diesem verbunden ist, so ist dies, sofern nicht explizit anders angegeben, so zu verstehen, dass eine Fluidverbindung für das jeweilige Arbeitsfluid zwischen den genannten Elementen besteht, im Falle einer hydraulisch lösbaren Federspeicherbremse zum Beispiel durch eine Flüssigkeitsleitung (Hydrauliköl-Leitung), im Falle einer pneumatisch lösbaren Federspeicherbremse zum Beispiel durch eine Druckluftleitung. Weiterhin soll die Formulierung "angeschlossen" oder "verbunden" nicht die Zwischenanordnung zusätzlicher Komponenten (etwa eines Schalters etc.) ausschließen.

Es ist vorgesehen, dass die Ventilanordnung einen zweiten Ausgangsanschluss zum Anschließen an eine Brems-Druckkammer in einem Bremszylinder einer Betriebsbremse aufweist. Der zweite Eingangsanschluss dient dabei dazu, an ein Bremspedal der Betriebsbremse angeschlossen zu werden, das auch als Notlöse-Druckquelle dient. Hierbei ist in der Normalstellung der zweite Eingangsanschluss mit dem zweiten Ausgangsanschluss verbunden. Die Steuerleitung verbindet den zweiten Eingangsanschluss mit dem Steueranschluss.

Das Bremspedal der Betriebsbremse wirkt vorteilhaft also gleichzeitig als manuelle Druckquelle zum Notlösen der Federspeicherbremse.

Die Ventilanordnung kann als als 4/2-Regelventil ausgeführt sein, insbe sondere als Schieberventil.

In der Normalstellung ist das Drucksignal der Federspeicherbremse (Parkbremse) auf die Federspeicher-Druckkammer, das Drucksignal der Betriebsbremse auf die Brems-Druckkammer durchgeschleift.

Bei Umschaltung der Ventilanordnung in die Notlösestellung werden diese Verbindungen unterbrochen und durch Verbinden des zweiten Eingangsanschlusses mit dem ersten Ausgangsanschluss wird das Bremspedal mit der Druckkammer der Federspeicherbremse verbunden. Durch manuelles Pumpen mit dem Bremspedal kann die Federspeicherbremse also auch bei Ausfall der Normalbetrieb-Druckquelle gelöst werden.

Da von dem zweiten Eingangsanschluss, der mit dem Bremspedal verbunden ist, auch der Steuerdruck für den Steueranschluss der Ventilanordnung abgegriffen wird, muss während des Druckaufbaus über das Bremspedal der Betriebsbremse zum Lösen der Federspeicherbremse die Ventilanordnung manuell in der Notlösestellung gehalten werden, beispielsweise indem der Benutzer einen als Betätigungselement zum Verstellen der Ventilanordnung von der Normalstellung in die Notlösestellung dienenden Druckknopf gedrückt hält, während er das Bremspedal betätigt, um zu verhindern dass der durch das Bremspedal erzeugte Druck die Ventilanordnung wieder in die Normalstellung bewegt.

Das Rückschlagventil sperrt den manuell erzeugten Druck in der Federspeicher-Druckkammer ein. Nach erfolgtem Druckaufbau ist der zweite Eingangsanschluss und damit auch der Steueranschluss drucklos, die Ventil - anordnung wird somit durch das Rastmittel in der Notlösestellung gehalten, das Betätigungselement kann losgelassen und das Fahrzeug kann abgeschleppt werden.

Wird bei oder nach der Wiederinbetriebnahme des Fahrzeugs das Bremspedal erstmalig wieder betätigt, so wird die Ventilanordnung aufgrund des hierdurch erzeugten Steuerdrucks am Steueranschluss unter Überwindung der Verrastung automatisch von der Notlösestellung zurück in die Normalstellung verbracht, und die Funktionalität sowohl der Betriebsbremse als auch der Federspeicherbremse ist wiederhergestellt.

Weiterhin wird auch Schutz beantragt für eine Federspeicherbremse, umfassend einen Federspeicher-Zylinder, einen Federspeicher-Kolben, der in dem Federspeicher-Zylinder zwischen einer aktiven Stellung und einer inaktiven Stellung verstellbar ist, eine Federspeicher-Federanordnung, die dazu aus - gebildet ist, den Federspeicher-Kolben die aktive Stellung vorzu spannen, eine in dem Federspeicher-Zylinder ausgebildete Feder speicher-Drucckammer, die dazu ausgebildet ist, bei hinreichender Druck beaufschlagung den Federspeicher-Kolben gegen die Vorspannkraft der Federspeicher-Federanordnung aus der aktiven Stellung in die inaktive Stellung zu bewe - gen, eine Normalbetrieb-Druckquelle zur maschinellen Erzeugung von Druck, eine Notlöse-Druckquelle zur vorzugsweise manuellen Erzeugung von Druck und eine erfindungsgemäße Ventilanordnung wie sie zuvor beschrieben wurde, wobei die Normalbetrieb-Druckquelle mit dem ersten Eingangsanschluss verbunden ist, die Notlöse-Druckquelle mit dem zweiten Eingangsanschluss verbunden ist, und die Federspeicher-Druckkammer mit dem ersten Ausgangsanschluss verbunden ist.

Für eine derartige Federspeicherbremse ergeben sich die gleichen Vorteile, die vorstehend in Bezug auf die erfindungsgemäße Ventilanordnung erläutert wurden.

Gemäß einer bevorzugten Weiterbildung der Erfindung kann das Bremspedal einer Betriebsbremse als Notlöse-Druckquelle verwendet werden, insbesondere in Kombination mit einer Ventilanordnung gemäß Anspruch 1, bei welcher der Steueranschluss der Ventilanordnung mit dem zweiten Eingangsanschluss verbunden ist.

Daher wird auch Schutz beantragt für eine Bremsanordnung umfassend eine Federspeicherbremse nach Anspruch 2 mit einer Ventilanordnung nach Anspruch 1 sowie eine Betriebsbremse mit einem Bremspedal zum manuellen Aufbauen von Druck, einem Bremszylinder, einem Bremskolben, welcher in dem Bremszylinder zwischen einer aktiven Stellung und einer in aktiven Stellung verstellbar ist, mit einer Brems-Federanordnung, die dazu ausgebildet ist, den Bremskolben in die inaktive Stellung vorzuspannen, und mit einer in dem Bremszylinder ausgebildeten Brems-Druckkammer, die dazu ausgebildet ist, bei hinrei chender Druckbeaufschlagung den Bremskolben gegen die Vorspannkraft der Brems-Federanordnung aus der inaktiven Stellung in die aktive Stellung zu bewegen, wobei das Bremspedal an den zweiten Eingangsanschluss angeschlossen ist, wobei der zweite Ausgangsanschluss an die Brems-Druckkammer angeschlossen ist.

Dies kann insbesondere dann in vorteilhafter Weise eingesetzt werden, wenn die Federspeicherbremse und die Betriebsbremse auf das gleiche Bremskraft-Übertragungselement einwirken, wenn also zum Beispiel die Bremsanordnung weiter ein zwischen dem Federspeicher-Kolben und dem Bremskolben der Betriebsbremse angeordnetes Bremskraft-Übertragungselement umfasst, welches verstellbar ist zwischen einer Bremsstellung, in der das Bremskraft-Übertragungselement zur Übertragung einer Bremskraft mit einem zu bremsenden Element gekoppelt ist, und einer Lösestellung, in der das Bremskraft-Übertragungselement von dem zu bremsenden Element entkoppelt ist.

Dabei hält der Federspeicher-Kolben in seiner aktiven Stellung das Bremskraft-Übertragungselement in der Bremsstellung und ist in seiner inaktiven Stellung zumindest dann von dem Bremskraft-Übertragungselement entkoppelt, wenn sich der Bremskolben der Betriebsbremse ebenfalls in der inaktiven Stellung befindet.

Weiterhin hält der Bremskolben der Betriebsbremse in seiner aktiven Stel - lung das Bremskraft-Übertragungselement in der Bremsstellung und ist in seiner inaktiven Stellung zumindest dann von dem Bremskraft-Übertragungselement entkoppelt, wenn sich der Federspeicher-Kolben in der inaktiven Stellung befindet.

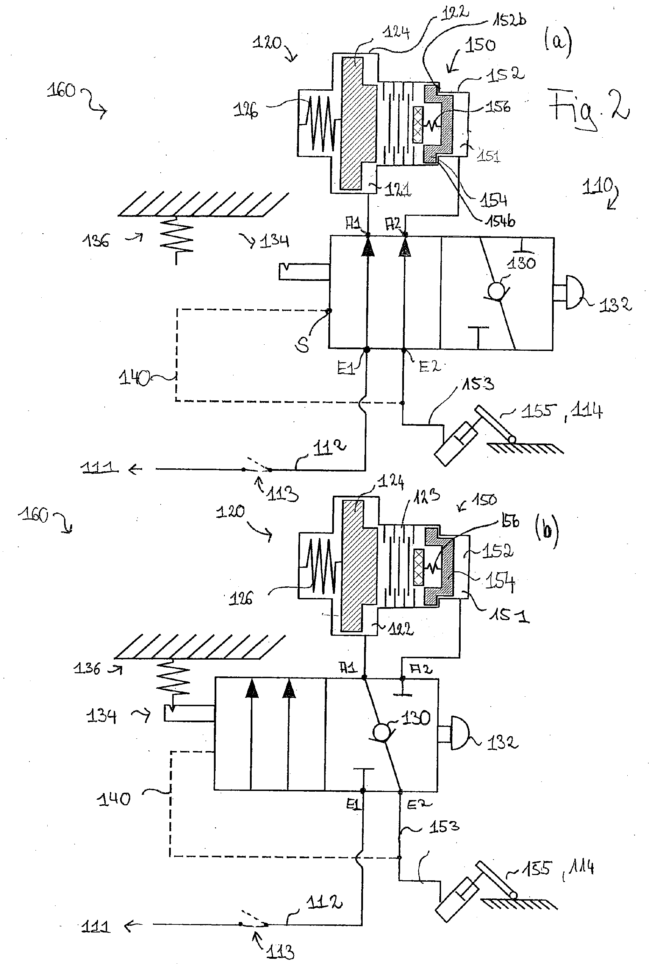

Die vorliegende Erfindung wird nachfolgend anhand eines bevorzugten Ausführungsbeispiels näher erläutert, das in den beiliegenden Figur 2 schematisch dargestellt ist.

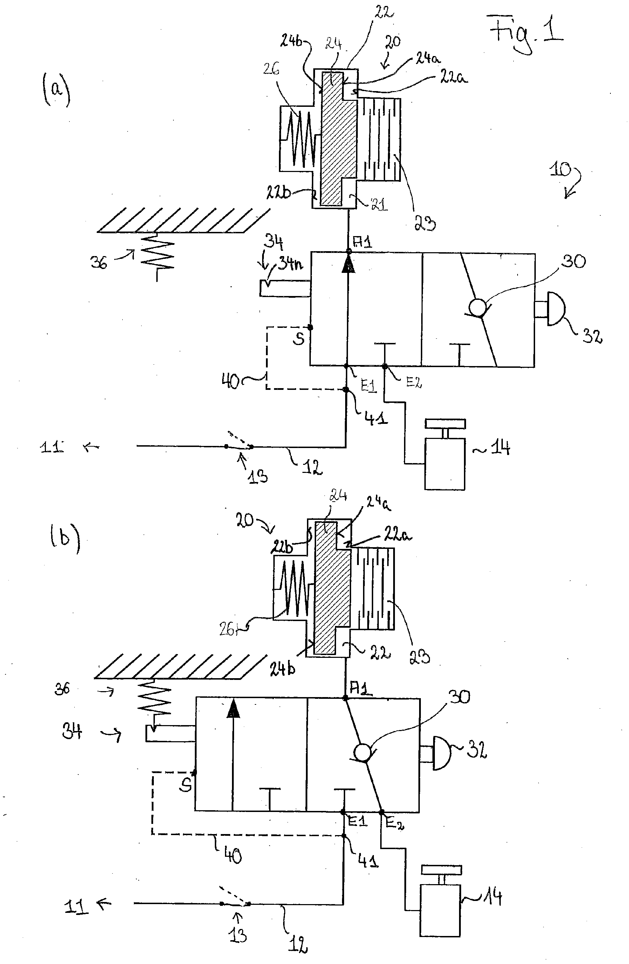

Dabei zeigt Figur 1 in den Teilabbildungen (a) und (b) eine Ventilanordnung und eine Federspeicherbremse gemäß einem bekannten Ausführungsbeispiel, Figur 2 zeigt in den Teilabbildungen (a) und (b) eine Ventilanordnung, eine Federspeicherbremse und eine Bremsanordnung gemäß einem Ausführungsbeispiel der vorliegenden Erfindung. Teilabbildung (a) zeigt dabei jeweils die Ventilanordnung in der Normal - stellung, Teilabbildung (b) in der Notlösestellung.
Es ist zu beachten, dass die Figuren stark schematisierte Darstellungen sind, welche lediglich das Prinzip der Erfindung verdeutlichen sollen und insbesondere nicht maßstäblich zu verstehen sind.
Figur 1 illustriert eine Ventilanordnung 10 für eine Federspeicherbremse 20 gemäß einem bekannten Ausführungsbeispiel, das kein Ausführungsbeispiel der vorliegenden Erfindung ist. Die Ventilanordnung umfasst einen ersten Eingangsanschluss E1 zum Anschließen an eine hier nicht im Einzelnen dargestellte Normalbetrieb-Druckquelle 11 zur maschinellen Erzeugung von Druck, einen zweiten Eingangsanschluss E2 zum Anschließen an eine Notlöse-Druckquelle 14, die hier beispielhaft als Handpumpe ausge bildet ist, und einen ersten Ausgangsanschluss A1 zum Anschließen an eine Federspeicher-Druckkammer 21 in einem Federspeicher-Zylinder 22 der Federspeicherbremse 20.

Die Ventilanordnung 10, die in dem vorliegenden Ausführungsbeispiel als Schieberventil ausgebildet sein kann, ist verstellbar zwischen einer in Teilabbildung (a) dargestellten Normalstellung, in welcher der erste Ein - gangsanschluss E1 mit dem ersten Ausgangsanschluss A1 verbunden ist, und einer in Teilabbildung (b) dargestellten Notlösestellung, in welcher der erste Eingangsanschluss E1 von dem ersten Ausgangsanschluss A1 abgesperrt ist und der zweite Eingangsanschluss E2 unter Zwischenanordnung eines Rückschlagventils 30 mit dem ersten Ausgangsanschluss A1 verbunden ist.

Der erste Ausgangsanschluss A1 kann mit der Federspeicher-Druckkammer 21 von dem Federspeicher-Zylinder 22 verbunden sein, in dem ein Federspeicher-Kolben 24 bewegbar angeordnet ist, zwischen einer in den Figuren dargestellten inaktiven Stellung, in der er von einem Bremskraft-Übertragungselement 23 (hier in Form eines Lamellenpakets) entkoppelt ist, und einer aktiven Stellung, in welcher er das Bremskraft-Übertragungselement 23 in einer Bremsstellung hält, in welcher das Bremskraft-Übertragungselement zur Übertragung einer Bremskraft mit einem zu bremsenden Element gekoppelt ist.

In der in den Figuren nicht dargestellten aktiven Stellung des Federspeicher-Kolbens 24 kann sich dieser mit einer ersten Anlagefläche 24a in Anlage an einer ersten Gegen-Anlagefläche 22a des Federspeicher-Zylinders 22 befinden. Anders als in den Figuren dargestellt, kann sich in der inakti ven Stellung der Federspeicher-Kolben 24 mit einer zweiten Anlagefläche 24b, die der ersten Anlagefläche 24a gegenüber liegt, in Anlage an einer zweiten Gegen-Anlagefläche 22b des Federspeicher-Zylinders 22 befinden.

Der Federspeicher-Kolben 24 ist durch eine Federspeicher-Federanordnung 26 in die aktive Stellung (in der Figur nach rechts) vorgespannt, wobei durch hinreichende Druckbeaufschlagung der Federspeicher-Druckkammer 21 die Vorspannkraft der Feder-Anordnung 26 überwunden und die Federspeicherbremse 20 so gelöst werden kann.

Im Normalbetrieb wird die Federspeicherbremse 20 dadurch gelöst, dass von der Normalbetrieb-Druckquelle 11 (Pumpe) über eine Signaldruckleitung 12 ein entsprechendes Drucksignal geliefert wird. Zum Aktivieren bzw. Deaktivieren der als Parkbremse wirkenden Federspeicherbremse 20 ist ein Schalter 13 in der Signaldruckleitung 12 vorgesehen, der im vorliegenden Beispiel durch Öffnen (Drucklos-Schalten der Federspeicher-Druckkammer 21) die Federspeicherbremse 120 aktiviert und sie durch Schließen (DruckBeaufschlagen der Federspeicher-Druckkammer 21) löst.

Kann die Normalbetrieb-Druckquelle 11 keinen Druck liefern, etwa weil der Motor des zugehörigen Kraftfahrzeugs ausgefallen ist, so kann die Federspeicherbremse 20 dadurch gelöst werden, dass zunächst die Ventilanordnung 10 über das vorliegend beispielhaft als Druckknopf ausgebildete Betätigungsmittel 32 manuell in die in Teilabbildung (b) dargestellte Notlösestellung verbracht wird.

In dieser Notlösestellung ist der zweite Eingangsanschluss E2 über das Rückschlagventil 30 mit dem ersten Ausgangsanschluss A1 und damit mit der Federspeicher-Druckkammer 21 verbunden. Über die mit dem zweiten Eingangsanschluss E2 verbundene Notlöse-Druckquelle 14 kann nun (vorzugsweise manuell) Druck in dem Federspeicher-Zylinder 21 aufgebaut werden, der den Federspeicher-Kolben 24 in die inaktive Stellung verbringt (in den Figuren nach links bewegt). Aufgrund des Rückschlagventils 30 bleibt der Druck in der Federspeicher-Druckkammer 21 erhalten, auch wenn durch die Notlöse-Druckquelle 14 kein Druck mehr erzeugt wird.

Das Rastmittel 34 dient dazu, die Ventilanordnung 10 überwindbar in der Notlösestellung zu verrasten. Es ist hier nur sehr schematisch als Element mit einer Rast-Nut 34n dargestellt, in die beispielsweise eine am Fahrzeug fixierte Federklaue als Gegen-Rastmittel 36 eingreifen kann,

Bei dem in Figur 1 dargestellten ersten Ausführungsbeispiel ist der erste Eingangsanschluss E1 über eine Steuerleitung 40 mit einem Steueranschluss S der Ventilanordnung 10 verbunden, wobei der Steueranschluss S dazu ausgebildet ist, bei hinreichender Druckbeaufschlagung die Ventilanordnung 10 unter Überwindung der Verrastung wieder aus der Notlösestellung in die Normalstellung zurückzustellen.

Wird also ein mit einer solchen Ventilanordnung 10 ausgestattetes Fahrzeug nach dem Notlösen der Federspeicherbremse abgeschleppt, repariert und anschließend zum ersten Mal wieder in Betrieb genommen, so sorgt der dabei in der Signalleitung 12 und damit am ersten Eingangsanschluss E1 anliegende Druck dafür, dass die Ventilanordnung 10 automatisch wieder in die Normalstellung zurück verbracht wird, so dass eine Rückstellung nicht vergessen werden kann.

Um zu verhindern, dass die automatische Rückstellung durch eine offene Stellung des Schalters 13 verhindert oder verzögert wird, kann vorgesehen sein, das Betätigungselement 32 so mit dem Schalter 13 zu koppeln, dass eine Betätigung des Betätigungselements automatisch ein Schließen des Schalters 13 bewirkt (nicht dargestellt). Alternativ kann zu dem gleichen Zweck vorgesehen sein, den Steuerdruck für den Steueranschluss S nicht, wie dargestellt hinter, sondern vor dem Schalter 13 von der Signaldruckleitung 12 abzugreifen, so dass sich der Schalter 13, anders als in Figur 1 dargestellt, zwischen dem Abgriff 41 für die Steuerleitung 40 und dem ersten Eingangsanschluss E1 in der Signaldruckleitung 12 befindet.

Figur 2 illustriert in den Teilabbildungen (a) und (b) eine Ventilanordnung 110, eine Federspeicherbremse 120 und eine Bremsanordnung 160 gemäß einem Ausführungsbeispiel der vorliegenden Erfindung.

Merkmale des zweiten Ausführungsbeispiels in Figur 2, die solchen des ersten Ausführungsbeispiels entsprechen, werden durch Bezugszeichen gekennzeichnet, die durch Addition der Zahl 100 aus den Bezugszeichen der entsprechenden Merkmale des ersten Ausführungsbeispiels in Figur 1 hervorgehen. Sofern Buchstaben zur Kennzeichnung verwendet werden, werden in beiden Ausführungsbeispielen die gleichen Buchstaben eingesetzt.

Das zweite Ausführungsbeispiel wird nur insofern näher beschrieben, als es sich von dem ersten Ausführungsbeispiel unterscheidet, auf dessen vorstehende Beschreibung ansonsten verwiesen wird.

Ein wesentlicher Unterschied zwischen dem zweiten und dem ersten Ausführungsbeispiel besteht darin, dass bei der Ventilanordnung 110 des zweiten Ausführungsbeispiels nicht der erste Eingangsanschluss E1 sondern der zweite Eingangsanschluss E2 über die Steuerleitung 140 mit dem Steueranschluss S der Ventilanordnung 110 verbunden ist.

Als Notlöse-Druckquelle 114 kann hierbei ein Bremspedal 155 einer Betriebsbremse 150 dienen.

Dabei ist vorgesehen, dass die Ventilanordnung weiter einen zweiten Aus - gangsanschluss A2 zum Anschließen an eine Brems-Druckkammer 151 in einem Bremszylinder 152 der Betriebsbremse 150 aufweist, und dass in der Normalstellung, wie in Teilabbildung (a) illustriert ist, der zweite Eingangs - anschluss E2 mit dem zweiten Ausgangsanschluss A2 verbunden ist.

Dabei kann vorgesehen sein, dass, wie in Figur 2 dargestellt, sowohl die Federspeicherbremse 120 als auch die Betriebsbremse 150 auf das gleiche Bremskraft-Übertragungselement 123 einwirken. Dabei kann das Bremskraft-Übertragungselement 123 zwischen dem Federspeicher-Kolben 124 und dem Bremskolben 154 der Betriebsbremse 150 angeordnet sein, wobei jeder Kolben von dem Federspeicher-Kolben 124 und dem Bremskolben 154 in seiner aktiven Stellung das Bremskraft-Übertragungselement 123 jeweils in der Bremsstellung hält und in seiner inaktiven Stellung zumindest dann von dem Bremskraft-Übertragungselement 123 entkoppelt ist, wenn der jeweils andere Kolben sich ebenfalls in der inaktiven Stellung befindet.

Befindet sich wenigstens ein Kolben von dem Federspeicher-Kolben 124 und dem Bremskolben 154 in der aktiven Stellung, wird das vorliegend als Lamellenpaket ausgebildete Bremskraft-Übertragungselement 123 so zwischen den beiden Kolben 124, 154 zusammengedrückt, dass eine Bremskraft von dem Bremskraft-Übertragungselement 123 zu einem zu bremsenden Element übertragen wird.

Optional kann vorgesehen sein, dass der Bremskolben 154 in seiner inaktiven Stellung mit einer Anlagefläche 154b an einer Gegen-Anlagefläche 152b des Bremszylinders 152 anliegt. Obwohl nicht in den Figuren dargestellt, kann weiter vorgesehen sein, dass der Bremskolben 154 in seiner aktiven Stellung mit einer weiteren Anlagefläche an einer entsprechenden weiteren Gegen-Anlagefläche des Bremszylinders 152 anliegt.

Bei dem zweiten Ausführungsbeispiel kann, genau wie bei dem ersten Ausführungsbeispiel, die Ventilanordnung 110 über das Betätigungselement 132 aus der Normalstellung (a) in die Notlösestellung (b) verbracht und dort über das Rastmittel 134 verrastet werden, wonach vermittels des Bremspedals 155 als Notlöse-Druckquelle 114 Druck in der Federspeicher-Druckkammer 121 erzeugt werden und damit der Federspeicher-Kolben 124 aus der (nicht dargestellten) aktiven Stellung in die (dargestellte) inaktive Stellung gegen die Vorspannkraft der Federspeicher-Federanordnung 126 verschoben werden kann.

Hierbei ist darauf zu achten, bei der Betätigung des Bremspedals 155 zum Aufbauen von Druck in der Federspeicher-Druckkammer das Betätigungselement 132 betätigt (gedrückt) zu halten, um zu verhindern, dass der aufgebaute Druck die Ventilanordnung 110 in unerwünschter Weise zurück in die Normalstellung verbringt.

Wird ein Fahrzeug mit einer solchen Bremsanordnung 160 nun nach dem vorstehend beschriebenen Notlösen der Federspeicherbremse 120 abgeschleppt, repariert und wieder in Betrieb genom men, so wird bei der ersten Betätigung des Bremspedals 155 über den dadurch in der Bremsleitung 153 erzeugten Druck, der über die Steuerleitung 140 an den Steueranschluss S der Ventilanordnung 110 weitergegeben wird, die Ventilanordnung 110 automatisch zurück in die Normalstellung verbracht, so dass eine Deaktivierung der Notlösung nicht vergessen werden kann.

Ergänzend wird darauf hingewiesen, dass auch dann, wenn Federspeicherbremse und Betriebsbremse in dem Sinne voneinander unabhängig sind, dass sie nicht auf das gleiche Bremskraft-Übertragungselement einwirken, vorgesehen sein kann, das Bremspedal der Betriebsbremse als Notlöse-Druckquelle einzusetzen, etwa indem die Notlöse-Druckquelle 14 aus dem ersten Ausführungsbeispiel durch das Bremspedal gebildet wird.

### Bezugszeichenliste

- E1: erster Eingangsanschluss der Ventilanordnung
- E2: zweiter Eingangsanschluss der Ventilanordnung
- A1: erster Ausgangsanschluss der Ventilanordnung
- A1: zweiter Ausgangsanschluss der Ventilanordnung
- S: Steueranschluss

- 10; 110: Ventilanordnung
- 11; 111: Normalbetrieb-Druckquelle
- 12; 112: Signaldruckleitung für die Federspeicherbremse
- 13; 113: Schalter
- 14; 114: Notlöse-Druckquelle (Handpumpe bzw. Bremspedal)
- 20; 120: Federspeicherbremse
- 21; 121: Federspeicher-Druckkammer
- 22; 122: Federspeicherzylinder
- 22a; 122a: erste Gegen-Anlagefläche des Federspeicher-Kolbens
- 22b; 122b: zweite Gegen-Anlagefläche des Federspeicher-Kolbens
- 23; 123: Bremskraft-Übertragungselement (Lamellenpaket)
- 24; 124: Federspeicher-Kolben
- 24a; 124a: erste Anlagefläche des Federspeicher-Kolbens
- 24b; 124b: zweite Anlagefläche des Federspeicher-Kolbens
- 26; 126: Federspeicher-Federanordnung
- 30; 130: Rückschlagventil
- 32; 132: Betätigungselement (Druckknopf)
- 34; 134: Rastmittel
- 36; 136: Gegen-Rastmittel
- 40; 140: Steuerleitung
- 150: Betriebsbremse
- 151: Brems-Druckkammer
- 152: Bremszylinder
- 152b: Gegen-Anlagefläche des Bremszylinders
- 153: Bremsleitung der Betriebsbremse
- 154: Bremskolben der Betriebsbremse
- 154b: Anlagefläche des Bremskolbens
- 155: Bremspedal der Betriebsbremse
- 156: Brems-Federanordnung der Betriebsbremse
- 160: Bremsanordnung

## Patentansprüche

1. Ventilanordnung (110) für eine Federspeicherbremse (120), wobei die Ventilanordnung (110) umfasst:
einen ersten Eingangsanschluss (E1) zum Anschließen an eine Normalbetrieb-Druckquelle (111) zur maschinellen Erzeugung von Druck;
einen zweiten Eingangsanschluss (E2) zum Anschließen an eine Notlöse-Druckquelle (114) zur vorzugsweise manuellen Erzeugung von Druck, und
einen ersten Ausgangsanschluss (A1) zum Anschließen an eine Federspeicher-Druckkammer (121) in einem Federspeicher-Zylinder (122) der Federspeicherbremse (120),
wobei die Ventilanordnung (110) verstellbar ist zwischen einer Normalstellung (a), in welcher der erste Eingangsanschluss (E1) mit dem ersten Ausgangsanschluss (A1) verbunden ist, und
einer Notlösestellung (b), in welcher der erste Eingangsanschluss (E1) von dem ersten Ausgangsanschluss (A1) abgesperrt ist, und der zweite Eingangsanschluss (E2) unter Zwischenanordnung eines Rückschlagventils (130) mit dem ersten Ausgangsanschluss (A1) verbunden ist,
wobei die Ventilanordnung (110) weiterhin umfasst:
ein Betätigungselement (132), um die Ventilanordnung (110) von der Normalstellung (a) in die Notlösestellung (b) zu verstellen,
ein Rastmittel (134), welches dazu ausgebildet ist, die Ventilanordnung (110) in der Notlösestellung (b) überwindbar zu verrasten,
einen Steueranschluss (S), der dazu ausgebildet ist, bei hinreichender Druckbeaufschlagung eine Verstellung der Ventilanordnung (110) von der Notlösestellung (b) in die Normalstellung (a) unter Überwindung der Verrastung zu bewirken, sowie
eine Steuerleitung (140), die den ersten (E1) oder den zweiten (E2) Eingangsanschluss mit dem Steueranschluss (S) verbindet, wobei die Ventilanordnung (110) **dadurch gekennzeichnet ist, dass** sie weiter einen zweiten Ausgangsanschluss (A2) zum Anschließen an eine Brems-Druckkammer (151) in einem Bremszylinder (152) einer Betriebsbremse (150) aufweist,
wobei der zweite Eingangsanschluss (E2) dazu dient, an ein Bremspedal (155) der Betriebsbremse (150) angeschlossen zu werden, das auch als Notlöse-Druckquelle (114) dient,
wobei in der Normalstellung (a) der zweite Eingangsanschluss (E2) mit dem zweiten Ausgangsanschluss (A2) verbunden ist, und wobei die Steuerleitung (140) den zweiten Eingangsanschluss (E2) mit dem Steueranschluss (S) verbindet.

2. Federspeicherbremse (120), umfassend:
einen Federspeicher-Zylinder (122)
einen Federspeicher-Kolben (124), welcher in dem Federspeicher-Zylinder (122) zwischen einer aktiven Stellung und einer inaktiven Stel - lung verstellbar ist,
eine Federspeicher-Federanordnung (126), die dazu ausgebildet ist, den Federspeicher-Kolben (124) in die aktive Stellung vorzuspannen,
eine in dem Federspeicher-Zylinder (122) ausgebildete Federspeicher-Druckkammer (122), die dazu ausgebildet ist, bei hinreichender Druck - beaufschlagung den Federspeicher-Kolben (124) gegen die Vorspannkraft der Federspeicher-Federanordnung (126) aus der aktiven Stellung in die inaktive Stellung zu bewegen,
eine Normalbetrieb-Druckquelle (111) zur maschinellen Erzeugung von Druck
eine Notlöse-Druckquelle (114) zur vorzugsweise manuellen Erzeugung von Druck,
**dadurch gekennzeichnet, dass** sie weiter eine Ventilanordnung (110) nach Anspruch 1, umfasst, wobei die Normalbetrieb-Druckquelle (111) mit dem ersten Eingangsanschluss (E1) verbunden ist, die Notlöse-Druckquelle (114) mit dem zweiten Eingangsanschluss (E2) verbunden ist, und die Federspeicher-Druckkammer (121) mit dem ersten Ausgangsanschluss (A1) verbunden ist.

3. Bremsanordnung (160), umfassend eine Federspeicherbremse (120) nach Anspruch 2 mit einer Ventilanordnung nach Anspruch 1 sowie eine Betriebsbremse (150) mit einem Bremspedal (155) zum manuellen Aufbauen von Druck, einem Bremszylinder (152), einem Bremskolben (154), welcher in dem Bremszylinder (152) zwischen einer aktiven Stellung und einer inaktiven Stellung verstellbar ist, mit einer Brems-Feder - anordnung (156), die dazu ausgebildet ist, den Bremskolben (154) in die inaktive Stellung vorzuspannen, und mit einer in dem Bremszylinder (152) ausgebildeten Brems-Druckkammer (151), die dazu ausgebildet ist, bei hinreichender Druckbeaufschlagung den Bremskolben gegen die Vorspannkraft der Brems-Federanordnung (156) aus der inaktiven Stellung in die aktive Stellung zu bewegen, wobei das Bremspedal (155) an den zweiten Eingangsanschluss (E2) angeschlossen ist, wobei der zweite Ausgangsanschluss (A2) an die Brems-Druckkammer (151) angeschlossen ist.

4. Bremsanordnung (160) nach Anspruch 3,
**dadurch gekennzeichnet, dass** sie weiter ein zwischen dem Federspeicher-Kolben (124) und dem Bremskolben (154) angeordnetes Bremskraft-Übertragungselement (123) umfasst, welches verstellbar ist zwischen einer Bremsstellung, in der das Bremskraft-Übertragungselement (123) zur Übertragung einer Bremskraft mit einem zu bremsenden Element gekoppelt ist, und einer Lösestellung, in der das Bremskraft-Übertragungselement (123) von dem zu bremsenden Element entkoppelt ist,
wobei der Federspeicher-Kolben (124) in der aktiven Stellung das Bremskraft-Übertragungselement (123) in der Bremsstellung hält und in der inaktiven Stellung zumindest dann von dem Bremskraft-Übertragungselement (123) entkoppelt ist, wenn sich der Bremskolben (154) in der inaktiven Stellung befindet, und
wobei der Bremskolben (124) in seiner aktiven Stellung das Bremskraft-Übertragungselement (123) in der Bremsstellung hält und in seiner inaktiven Stellung zumindest dann von dem Bremskraft-Übertragungselement (123) entkoppelt ist, wenn sich der Federspeicher-Kolben (124) in der inaktiven Stellung befindet.

## Claims

1. Valve assembly (110) for a spring-loaded brake (120), the valve assembly (110) comprising:
a first inlet connection (E1) for connection to a normal operation pressure source (111) for mechanical generation of pressure;
a second inlet connection (E2) for connection to an emergency release pressure source (114) for preferably manual generation of pressure, and
a first outlet connection (A1) for connection to a spring-loaded pressure chamber (121) in a spring-loaded cylinder (122) of the spring-loaded brake (120),
the valve assembly (110) being adjustable between
a normal position (a) in which the first inlet connection (E1) is connected to the first outlet connection (A1), and
an emergency release position (b) in which the first inlet connection (E1) is shut off from the first outlet connection (A1), and the second inlet connection (E2) is connected to the first outlet connection (A1), with interposition of a check valve (130), the valve assembly (110) further comprising:
an actuation element (132), for adjusting the valve assembly (110) from the normal position (a) into the emergency release position (b),
a latching means (134) which is designed for latching the valve assembly (110) in the emergency release position (b) in a manner that can be overcome,
a control connection (S) that is designed to bring about an adjustment of the valve assembly (110) from the emergency release position (b) into the normal position (a), overcoming the latching, when sufficient pressure is applied, and
a control line (140) which connects the first (E1) or the second (E2) inlet connection to the control connection (S), the valve assembly (110) being **characterised in that** it further comprises a second outlet connection (A2) for connection to a brake pressure chamber (151) in a brake cylinder (152) of a service brake (150),
the second inlet connection (E2) being intended to be connected to a brake pedal (155) of the service brake (150), which pedal also functions as the emergency release pressure source (114),
the second inlet connection (E2) being connected to the second outlet connection (A2) in the normal position (a), and the control line (140) connecting the second inlet connection (E2) to the control connection (S).

2. Spring-loaded brake (120), comprising:
a spring-loaded cylinder (122)
a spring-loaded piston (124) which is adjustable, in the spring-loaded cylinder (122), between an active position and an inactive position,
a spring-loaded spring assembly (126) which is designed for preloading the spring-loaded piston (124) in the active position,
a spring-loaded pressure chamber (122) that is formed in the spring-loaded cylinder (122) and is designed to move the spring-loaded piston (124) out of the active position and into the inactive position, counter to the preload force of the spring-loaded spring assembly (126), when sufficient pressure is applied,
a normal operation pressure source (111) for mechanical generation of pressure,
an emergency release pressure source (114) for preferably manual generation of pressure,
**characterised in that** it further comprises a valve assembly (110) according to claim 1, the normal operation pressure source (111) being connected to the first inlet connection (E1), the emergency release pressure source (114) being connected to the second inlet connection (E2), and the spring-loaded pressure chamber (121) being connected to the first outlet connection (A1).

3. Brake assembly (160) comprising a spring-loaded brake (120) according to claim 2 having a valve assembly according to claim 1, and a service brake (150) comprising a brake pedal (155) manually building up pressure, a brake cylinder (152), a brake piston (154) which is adjustable, in the brake cylinder (152), between an active position and an inactive position, having a brake spring assembly (156) that is designed to preload the brake piston (154) in the inactive position, and having a brake pressure chamber (151) that is formed in the brake cylinder (152) and is designed to move the brake piston out of the inactive position and into the active position, counter to the preload force of the brake spring assembly (156), when sufficient pressure is applied, the brake pedal (155) being connected to the second inlet connection (E2), the second outlet connection (A2) being connected to the brake pressure chamber (151).

4. Brake assembly (160) according to claim 3,
**characterised in that** it further comprises a brake force transmission element (123) that is arranged between the spring-loaded piston (124) and the brake piston (154) and is adjustable between a braking position in which the brake force transmission element (123) is coupled to an element to be braked, in such a way as to transmit a brake force, and a release position in which the brake force transmission element (123) is decoupled from the element to be braked,
the spring-loaded piston (124) holding the brake force transmission element (123) in the braking position when in the active position and being decoupled from the brake force transmission element (123) in the inactive position, at least when the brake piston (154) is in the inactive position, and
the brake piston (124) holding the brake force transmission element (123) in the braking position when in the active position, and being decoupled from the brake force transmission element (123) in the inactive position, at least when the spring-loaded piston (124) is in the inactive position.

## Revendications

1. Ensemble de vannes (110) pour un frein d'accumulateur à ressort (120), dans lequel l'ensemble de vannes (110) comprend :
un premier raccord d'entrée (E1) destiné à être raccordé à une source de pression en fonctionnement normal (111) servant à produire mécaniquement une pression ;
un deuxième raccord d'entrée (E2) destiné à être raccordé à une source de pression en déclenchement d'urgence (114) servant à produire de préférence manuellement une pression, et
un premier raccord de sortie (A1) destiné à être raccordé à une chambre de pression d'accumulateur à ressort (121) dans un cylindre d'accumulateur à ressort (122) du frein d'accumulateur à ressort (120),
dans lequel l'ensemble de vannes (110) peut être ajusté entre une position normale (a), dans laquelle le premier raccord d'entrée (E1) est relié au premier raccord de sortie (A1), et
une position de déclenchement d'urgence (b), dans laquelle le premier raccord d'entrée (E1) est fermé par le premier raccord de sortie (A1), et le deuxième raccord d'entrée (E2) est relié au premier raccord de sortie (A1) en intercalant une vanne anti-retour (130),
dans lequel l'ensemble de vannes (110) comprend par ailleurs :
un élément d'actionnement (132) pour ajuster l'ensemble de vannes (110) de la position normale (a) dans la position de déclenchement d'urgence (b),
un moyen de verrouillage (134), lequel est réalisé pour verrouiller de manière déverrouillable l'ensemble de vannes (110) dans la position de déverrouillage d'urgence (b),
un raccord de commande (S), qui est réalisé pour entraîner lors d'une application de pression suffisante un ajustement de l'ensemble de vannes (110) de la position de déverrouillage d'urgence (b) dans la position normale (a) en surmontant l'enclenchement, ainsi
qu'une ligne de commande (140), qui relie le premier (E1) ou le deuxième (E2) raccord d'entrée au raccord de commande (S), **caractérisé en ce que** l'ensemble de vannes (110) présente par ailleurs un deuxième raccord de sortie (A2) destiné à être raccordé à une chambre de pression de frein (151) dans un cylindre de frein (152) d'un frein de fonctionnement (150),
dans lequel le deuxième raccord d'entrée (E2) sert à être raccordé à une pédale de frein (155) du frein de fonctionnement (150), qui fait office également de source de pression en déclenchement d'urgence (114),
dans lequel dans la position normale (a), le deuxième raccord d'entrée (E2) est relié au deuxième raccord de sortie (A2), et dans lequel la ligne de commande (140) relie le deuxième raccord d'entrée (E2) au raccord de commande (S).

2. Frein d'accumulateur à ressort (120) comprenant :
un cylindre d'accumulateur à ressort (122),
un piston d'accumulateur à ressort (124), lequel peut être ajusté dans le cylindre d'accumulateur à ressort (122) entre une position active et une position inactive,
un ensemble de ressorts d'accumulateur à ressort (126), qui est réalisé pour précontraindre le piston d'accumulateur à ressort (124) dans la position active,
une chambre de pression d'accumulateur à ressort (122) réalisée dans le cylindre d'accumulateur à ressort (122), qui est réalisée pour déplacer, en cas d'application de pression suffisante, le piston d'accumulateur à ressort (124) à l'encontre de la force de précontrainte de l'ensemble de ressorts d'accumulateur à ressorts (126) hors de la position active dans la position inactive ;
une source de pression en fonctionnement normal (111) servant à produire mécaniquement une pression,
une source de pression de déclenchement d'urgence (114) servant à produire de préférence manuellement une pression,
**caractérisé en ce qu'**il comprend par ailleurs un ensemble de vannes (110) selon la revendication 1, dans lequel la source de pression en fonctionnement normal (111) est reliée au premier raccord d'entrée (E1), la source de pression en déclenchement d'urgence (114) est reliée au deuxième raccord d'entrée (E2) et la chambre de pression d'accumulateur à ressort (121) est reliée au premier raccord de sortie (A1).

3. Ensemble de freinage (160), comprenant un frein d'accumulateur à ressort (120) selon la revendication 2 avec un ensemble de vannes selon la revendication 1 ainsi qu'un frein de fonctionnement (150) avec une pédale de frein (155) servant à établir manuellement une pression, un cylindre de frein (152), un piston de frein (154), lequel peut être ajusté dans le cylindre de frein (152) entre une position active et une position inactive, avec un ensemble de ressorts de frein (156), qui est réalisé pour précontraindre le piston de frein (154) dans la position inactive, et avec une chambre de pression de frein (151) réalisée dans le cylindre de frein (152), qui est réalisée pour déplacer en cas d'application de pression suffisante le piston de frein à l'encontre de la force de précontrainte de l'ensemble de ressorts de frein (156) hors de la position inactive dans la position active, dans lequel la pédale de frein (155) est raccordée au deuxième raccord d'entrée (E2), dans lequel le deuxième raccord de sortie (A2) est raccordé à la chambre de pression de frein (151).

4. Ensemble de frein (160) selon la revendication 3,
**caractérisé en ce qu'**il comprend par ailleurs un élément de transmission de force de frein (123) disposé entre le piston d'accumulateur à ressort (124) et le piston de frein (154), lequel peut être ajusté entre une position de frein, dans laquelle l'élément de transmission de force de frein (123) est couplé aux fins de la transmission d'une force de frein à un élément à freiner, et une position de déclenchement, dans laquelle l'élément de transmission de force de frein (123) est découplé de l'élément à freiner, dans lequel le piston d'accumulateur à ressort (124) maintient, dans la position active, l'élément de transmission de force de frein (123) dans la position de frein et est découplé dans la position inactive au moins alors de l'élément de transmission, de force de frein (123) quand le piston de frein (154) se trouve dans la position inactive, et
dans lequel le piston de frein (124) maintient, dans sa position active, l'élément de transmission de force de frein (123) dans la position de frein et est découplé, dans sa position inactive, au moins alors de l'élément de transmission de force de frein (123) quand le piston d'accumulateur à ressort (124) se trouve dans la position inactive.
